# FASCICULE DE BREVET EUROPEEN

(11) **EP 0 592 658 B1**
(45) Date de publication et mention de la délivrance du brevet: **13.03.1996**
(21) Numéro de dépôt: 93911828.7
(22) Date de dépôt: 27.04.1993
(51) Int. Cl.: G01F 1/32

(54) **DEBITMETRE A OSCILLATEUR FLUIDIQUE**
DURCHFLUSSMESSER MIT EINEM FLUIDISCHEN OSZILLATOR
FLOW METER HAVING A FLUIDIC OSCILLATOR

(30) Priorité: 29.04.1992 FR 9205303
(43) Date de publication de la demande: 20.04.1994
(73) Titulaire: SCHLUMBERGER INDUSTRIES S.A., F-92120 Montrouge (FR)
(72) Inventeur: HUANG, Bao, Tuan, F-92160 Antony (FR)
(86) Numéro de dépôt international: FR9300409
(87) Numéro de publication internationale: WO9322627

(56) Documents cités:
- EP-A- 0 295 623
- FR-A- 2 326 685
- FR-A- 2 663 416
- PATENT ABSTRACTS OF JAPAN vol. 13, no. 547 (P-971)(3895) 7 Décembre 1989, & JP,A,12 27 925

## Description

La présente invention concerne un oscillateur fluidique permettant la mesure des débits d'un fluide liquide ou gazeux, en écoulement.

Le brevet U.S. N° 4,244,230 décrit un débitmètre à oscillateur fluidique symétrique par rapport à un plan de symétrie. Ce débitmètre possède une entrée en forme de buse délivrant un jet fluide bidimensionnel dans une chambre. A l'intérieur de cette dernière, un obstacle possède une cavité frontale placée sur le parcours du jet.

L'oscillation du jet, transversale par rapport au plan de symétrie du débitmètre, s'accompagne de la formation dans la cavité de deux tourbillons, de part et d'autre du jet. Chaque tourbillon est alternativement fort et faible, en opposition de phase. Au cours de l'oscillation, l'impact du jet balaye les parois de la cavité.

Deux prises de pression disposées de part et d'autre du plan de symétrie sont connectées à un ou plusieurs capteurs de pression de manière à mesurer la fréquence des oscillations du jet dans la cavité.

Les demandes de brevet FR-A-2 663 416 et EP-A-0 295 623 décrivent aussi ce type de débit mètre.

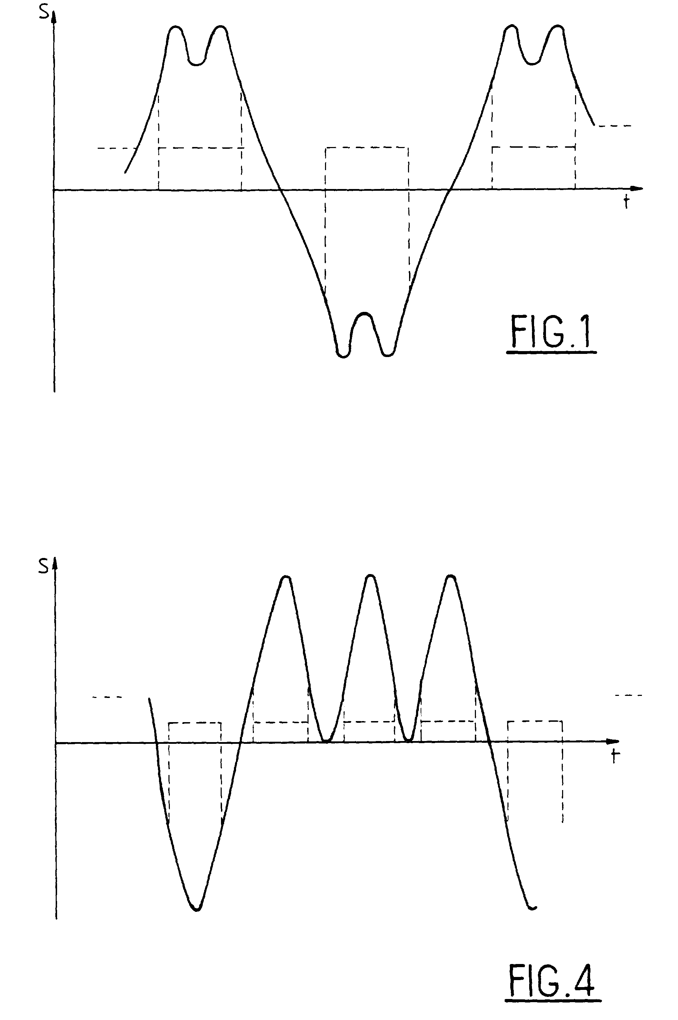

La figure 1 représente schématiquement le signal électrique S délivré par un capteur de pression mesurant la différence de pression entre les deux prises de pression au cours du temps t.

Chaque extremum présente un double pic. Le point le plus profond de la vallée située entre deux pics correspond au passage de l'impact du jet par le point de déviation maximum.

En effet, si l'on considère un jet balayant la cavité en s'éloignant du plan de symétrie à la suite de son passage au niveau d'une prise de pression, le jet continue son parcours en direction du point de déviation maximum.

Après avoir présenté un maximum, la pression mesurée à l'endroit de la prise de pression diminue. Une fois atteint, le point de déviation maximum (fond de la vallée entre les pics), le jet revient vers le plan de symétrie, se rapproche de la prise de pression, (le second pic correspond au passage du jet à l'endroit de la prise de pression), puis la dépasse pour se diriger vers la prise de pression opposée.

Le signal S est transformé en créneaux par un système électronique adapté sur un dépassement de seuil choisi de manière adéquate. Chaque créneau correspond à un volume de fluide ayant traversé le débitmètre. Le comptage des créneaux permet donc bien de déduire le débit.

La précision d'une telle mesure est égale à une demi période d'oscillation.

En effet, lorsque l'écoulement de fluide est interrompu, au moment où l'oscillation cesse, la position exacte de l'impact du jet au fond de la cavité est inconnue, ce qui entraîne l'imprécision sur la mesure.

La présente invention a pour but d'améliorer la précision d'un débitmètre du type décrit ci dessus, au minimum d'un facteur 2, et ceci sans augmenter pour autant la fréquence d'oscillation du jet dans la cavité.

Pour cela, la présente invention qui est définie dans la revendication 1 préconise de placer, en plus des prises de pression symétriques de part et d'autre du plan de symétrie, au moins une prise de pression en un point situé sur l'axe d'intersection du plan de symétrie avec le fond de la cavité. Une mesure de pression différentielle est effectuée entre d'une part la différence de pression existant entre les prises de pression placées symétriquement de part et d'autre du plan de symétrie et d'autre part la pression existant au niveau de la prise de pression située sur l'axe d'intersection. Les créneaux formés à partir du signal correspondant à la pression différentielle apparaissent à une fréquence plus importante que dans l'art antérieur (au moins à une fréquence double); chaque créneau correspond à une unité de volume débitée inférieure et donc la précision sur la mesure est améliorée.

Préférentiellement les prises de pression symétriques par rapport au plan de symétrie sont situées sensiblement à l'emplacement des points de déviation maximum de l'impact du jet à l'intérieur de la cavité, dans la gamme de débits considérée.

Les caractéristiques de l'invention ressortiront mieux à la lecture de la description qui suit, donnée à titre illustratif et non limitatif, et se référant aux dessins annexés sur lesquels:
La figure 1, déjà décrite, représente schématiquement le signal mesuré par un débitmètre de l'art antérieur;
La figure 2 représente schématiquement un dispositif conforme à l'invention, vu de dessus;
La figure 3 représente schématiquement une vue en perspective d'un obstacle faisant partie d'un débitmètre conforme à l'invention;
La figure 4 représente schématiquement le signal issu de la mesure de pression différentielle ainsi que les créneaux de comptage du volume débité.

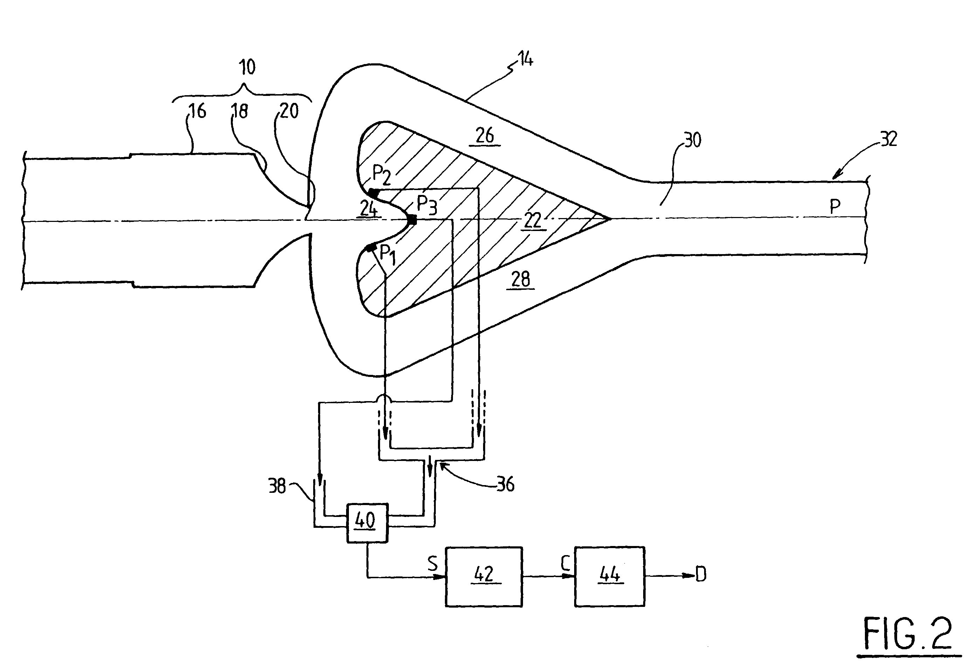

En référence à la figure 2, on décrit maintenant un exemple de réalisation d'un dispositif conforme à l'invention s'appliquant aussi bien à un liquide qu'à un gaz. Le débitmètre comporte une entrée de fluide 10 raccordée d'une part à la canalisation d'arrivée de fluide 12 et d'autre part à une chambre d'oscillation 14.

L'entrée de fluide 10 comporte une chambre de tranquillisation parallélépipèdique 16 qui permet le passage d'un jet de section transversale circulaire dans la canalisation 12 à un jet de section transversale carrée ou rectangulaire. La chambre de tranquillisation est terminée par un convergent 18 possédant une ouverture d'entrée 20. L'ouverture d'entrée rectangulaire respecte les conditions de bidimensionnalité bien connues de l'Homme du Métier de manière à délivrer dans la chambre d'oscillation 14 un jet bidimensionnel oscillant transversalement par rapport au plan de symétrie P du débitmètre.

Un obstacle 22 est placé dans la chambre d'oscillation. Une cavité 24 est pratiquée dans la partie frontale de l'obstacle 22 en regard de l'ouverture d'entrée 20. Le jet fluide après avoir pénétré dans la chambre d'oscillation, balaye les parois de la cavité 24 au cours de son oscillation.

L'écoulement fluide est évacué par les canaux 26, 28 formés entre les parois de l'obstacle 22 et celles de la chambre d'oscillation 14. L'écoulement est dirigé par ces canaux vers une ouverture de sortie 30, raccordée à une conduite d'évacuation 32.

La mesure de débit est effectuée en détectant le balayage du fond de la cavité 24 par le jet au cours de son oscillation. La fréquence d'oscillation du jet est proportionnelle au débit.

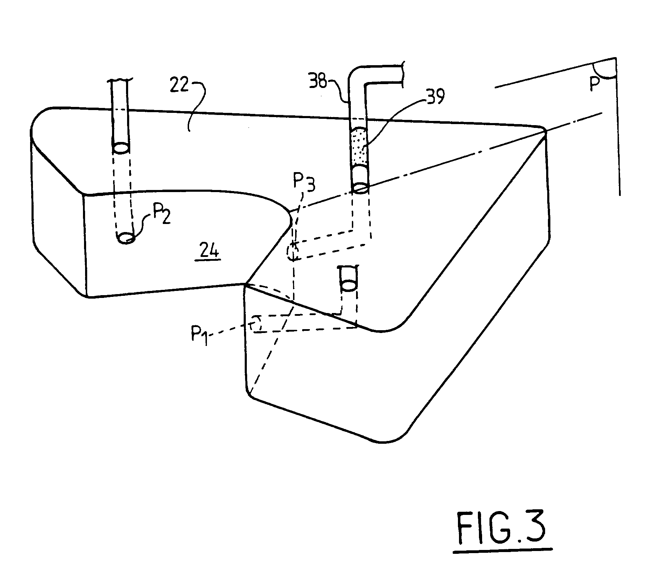

Conformément à l'invention, pour effectuer la mesure de débit, le dispositif représenté sur la figure 2 comprend trois prises de pression P1, P2, P3. Comme on peut le voir sur la figure 3 représentant une vue en perspective de l'obstacle 22, ces prises de pression sont réalisées par des canalisations percées dans l'obstacle 22 et débouchant d'une part en trois points (P1, P2, P3) de la cavité 24 et d'autre part en trois points situés par exemple sur la partie supérieure de l'obstacle.

Les prises de pression P1 et P2 sont placées symétriquement de part et d'autre du plan de symétrie P, par exemple à mi-hauteur de l'obstacle. Les prises de pression P1 et P2 sont avantageusement situées au niveau des points de déviation maximum du jet lors de son oscillation dans la cavité.

On sait que la position de ces points de déviation maximum varie légèrement avec le débit de fluide. La position d'une prise de pression ne correspond exactement au point de déviation maximum que pour un débit donné. Si l'on se réfère à la figure 1, l'écart entre la position d'un point de déviation et celle d'une prise de pression est à l'origine de la vallée entre deux pics de pression détectés lors du passage du jet sur une prise de pression, ceci dans le cas où le jet dépasse la prise de pression en s'écartant du plan de symétrie au cours de l'oscillation. Dans le cas où l'amplitude d'oscillation du jet n'est pas suffisante pour dépasser les positions des prises de pression, lorsque le jet s'écarte du plan de symétrie, cet effet ne se fait pas sentir. Les prises de pression P1 et P2 sont donc positionnées de manière à ce que, dans la plage de débit à mesurer la vallée qui peut se former sur le signal entre deux pics correspondant aux passages sucessifs du jet sur une prise de pression, ne soit ni suffisamment large ni suffisamment profonde pour perturber la mesure.

A nouveau sur la figure 2, on voit que les prises de pression P1 et P2 sont reliées l'une à l'autre par un raccord 36 en forme de T.

La prise de pression P3 est disposée à mi hauteur de l'obstacle par exemple, sur l'axe d'intersection du plan de symétrie P avec le fond de la cavité 24.

La canalisation de sortie du raccord 36 ainsi que la canalisation 38 reliée à la prise de pression P3 sont connectées à un capteur de pression 40 par exemple en silicium et à effet thermique ou tout autre type de détecteur de flux ou de pression. On peut utiliser par exemple un capteur de pression du type Validyne DP103 commercialisé par la société Validyne Engineering Corporation.

Dans une variante de réalisation, chaque prise de pression peut-être connectée à un capteur de pression indépendant, un traitement adéquat du signal délivré par chacun de ces capteurs permettant d'obtenir le résultat recherché.

Le capteur de pression 40 délivre sur une sortie un signal électrique S correspondant aux variations de la différence de pression entre la pression au point P3 pris comme référence et la pression différentielle entre les points P1 et P2 directement obtenue en sortie du raccord en T 36. La figure 4 représente schématiquement le signal S ainsi obtenu au cours du temps t. Pour la simplicité du dessin, les vallées éventuelles se formant aux sommets des impulsions et correspondant au cas de dépassement des positions des prises de pressions symétriques par le jet au cours de son oscillation n'ont pas été représentées.

Etant donné que les variations de pression au niveau du point P3 sont plus importantes que celles qui peuvent intervenir au niveau de P1 ou P2, une perte de charge peut-être introduite au niveau de la prise de pression P3 pour compenser au moins partiellement l'effet de ces variations de pression. Dans l'exemple représenté sur la figure 3, la perte de charge est constituée par une bourre poreuse 39 placée dans la canalisation 38.

L'introduction de cette perte de charge permet d'éviter l'apparition d'une dissymétrie dans le signal S qui risquerait d'entrainer une perte de la fréquence mesurée.

La sortie de l'anémomètre 40 est connectée à l'entrée d'un système électronique 42 permettant de transformer le signal S en une suite de créneaux (formant le signal C) apparaissant lors du dépassement d'un seuil préalablement choisi.

Les créneaux ainsi créés apparaissent à une fréquence double de celle mesurée dans l'art antérieur. De cette manière, chaque créneau correspond à un volume de fluide traversant le débitmètre inférieur (d'un facteur deux) au volume correspondant aux créneaux de l'art antérieur. Le comptage des créneaux est effectué par un dispositif de comptage 44 délivrant un signal D correspondant au volume de fluide ayant traversé le débitmètre pendant le temps de comptage et donc proportionnel au débit.

Le volume unitaire compté par créneau étant inférieur à celui de l'art antérieur, la précision de la mesure est augmentée d'autant.

## Revendications

1. Débitmètre à oscillateur fluidique du type à jet de fluide bidimensionnel oscillant transversalement de part et d'autre d'un plan de symétrie longitudinal (P), comprenant:
une chambre d'oscillation (14);
un obstacle (22) disposé dans la chambre d'oscillation et possédant dans sa partie frontale, une cavité (24) placée sur le parcours du jet fluide de manière à ce que le jet fluide balaye les parois de la cavité (24) au cours de son oscillation;
des moyens (40) pour délivrer un signal S correspondant à une pression différentielle;
des moyens (42, 44) pour déduire un débit de fluide à partir de la mesure de pression différentielle,
caractérisé en ce que: ladite pression différentielle résulte de la différence entre une pression prise en un point (P3) situé sur l'axe d'intersection du plan de symétrie (P) avec le fond de la cavité (24) et une pression différentielle résultant de la prise de pression en deux points (P1, P2) disposés symétriquement de part et d'autre du plan de symétrie (P).

2. Débitmètre selon la revendication 1 caractérisé en ce que les deux points (P1, P2) disposés symétriquement de part et d'autre du plan de symétrie (P) sont placés sensiblement à l'emplacement des points de déviation maximum de jet fluide dans la cavité (24), dans la gamme de débits considérée.

3. Débitmètre selon la revendication 1 caractérisé en ce qu' une perte de charge (39) est introduite au niveau de la prise de pression située sur l'axe d'intersection du plan de symétrie (P) avec le fond de la cavité (24).

## Patentansprüche

1. Durchflußmesser mit einem Fluidikoszillator des Typs mit zweidimensionalen Fluidstrahl, der nach beiden Seiten quer zu einer Längssymmetrieebene (P) schwingt, mit :
einer Oszillationskammer (14);
einem Hindernis (22), das in der Oszillationskammer angeordnet ist und in seinem vorderen Teil einen Hohlraum (24) besitzt, der derart auf der Bahn des Fluidstrahls angeordnet ist, daß der Fluidstrahl im Laufe seiner Schwingung die Wände des Hohlraums (24) überstreicht;
Mitteln (40) zur Abgabe eines Signals S, das einem Differenzdruck entspricht;
Mitteln (42, 44), um ausgehend von der Differenzdruckmessung einen Fluiddurchsatz abzuleiten,
dadurch gekennzeichnet, daß sich der Differenzdruck aus der Differenz zwischen einem an einem Punkt (P3), der an der Schnittachse der Symmetrieebene (P) mit dem Boden des Hohlraums (24) liegt, erfaßten Druck und einem Differenzdruck ergibt, der sich aus der Druckerfassung an zwei Punkten (P1, P2) ergibt, die beiderseits der Symmetrieebene (P) symmetrisch angeordnet sind.

2. Durchflußmesser nach Anspruch 1, dadurch gekennzeichnet, daß die beiderseits der Symmetrieebene (P) symmetrisch angeordneten Punkte (P1, P2) im wesentlichen am Ort der Punkte maximaler Abweichung des Fluidstroms in dem Hohlraum (24) innerhalb des betrachteten Durchsatzbereichs angeordnet sind.

3. Durchflußmesser nach Anspruch 1, dadurch gekennzeichnet, daß auf Höhe der Druckabnahme, die an der Schnittachse der Symmetrieebene (P) mit dem Boden des Hohlraums (24) liegt, ein Druckverlust (39) eingebracht wird.

## Claims

1. A fluidic oscillator flowmeter of the two-dimensional fluid jet type with the jet oscillating transversely on either side of a longitudinal plane of symmetry (P), comprising :
- an oscillation chamber (14);
- an obstacle located in the oscillation chamber and having in its front part a cavity (24) located in the path of the fluid jet such that the fluid jet sweeps over the walls of the cavity during the course of its oscillation;
- means (40) for providing a signal S corresponding to a differential pressure;
- means (42, 44) for determining a fluid flow rate from the differential pressure measurement, characterized in that said differential pressure results from the difference between a pressure tapping at a point (P3) located on the axis of intersection between the plane of symmetry (P) and the bottom of the cavity (24) and a differential pressure resulting from tapping off the pressure at two points (P1, P2) located symmetrically on either side of the plane of symmetry (P).

2. A fluidic oscillator flowmeter according to claim 1, characterized in that the two points (P1, P2) located symmetrically on either side of the plane of symmetry (P) are located substantially at the sites of the points of maximum deviation of the fluid jet in the cavity (24), within the range of flow rates in question.

3. A fluidic oscillator flowmeter according to claim 1, characterized in that a head loss (39) is introduced in the region of the pressure tapping located on the axis of intersection between the plane of symmetry (P) and the bottom of the cavity (24).
